# FASCICULE DE BREVET EUROPEEN

(11) **EP 1 806 243 B1**
(45) Date de publication et mention de la délivrance du brevet: **19.06.2013**
(21) Numéro de dépôt: 06126719.1
(22) Date de dépôt: 20.12.2006
(51) Int. Cl.: B60C 23/00

(54) **Système de régulation de pression d'un pneumatique comprenant des moyens de dégonflage passifs, roue et pneumatique comprenant un tel système**
Reifendruckregelsystem mit Mitteln zum passiven Luftablassen, Rad und Reifen mit solch einem System
System for adjusting the tyre pressure comprising passive deflating means, wheel and tyre comprising such a system

(30) Priorité: 06.01.2006 FR 0600173
(43) Date de publication de la demande: 11.07.2007
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: Alff, Denis, 63200 Malauzat (FR)
(74) Mandataire: Dequire, Philippe Jean-Marie Denis

(56) Documents cités:
- DE-A1- 3 631 712
- DE-A1- 10 338 709

## Description

La présente invention concerne un ensemble d'une roue et d'un pneumatique, un système de régulation de la pression d'un pneumatique, une roue, un pneumatique et un procédé de régulation de la pression d'air d'un pneumatique.

On connaît dans l'état de la technique un système de régulation de la pression d'un pneumatique du type comprenant des moyens de gonflage et des moyens de dégonflage du pneumatique.

Ce système de régulation comprend également des premiers et seconds moyens pour commander respectivement les moyens de gonflage et les moyens de dégonflage. La régulation de la pression du pneumatique est obtenue par actionnement des premiers et seconds moyens de commande.

Le document GB 2 324 511 présente un ensemble roue et pneumatique comprenant des moyens de dégonflage passifs inactifs en dessous d'un seuil prédéterminé de pression du pneumatique et actifs au dessus de ce seuil, dans lequel le seuil prédéterminé correspond à une pression de gonflage excessive. Le seuil est tel qu'au-delà de ce seuil, la performance du pneumatique risque d'être dégradée.

Le document DE 36 31 712 présente un système de régulation de la pression d'un pneumatique correspondant au préambule de la revendication 1 dans lequel les moyens de gonflage régulent la pression du pneumatique à une pression strictement inférieure au seuil prédéterminé de pression d'activation des moyens de dégonflage.

L'invention a notamment pour but de simplifier la commande des moyens de gonflage et de dégonflage du pneumatique.

A cet effet, l'invention a pour objet un système de régulation de la pression d'un pneumatique d'un véhicule, comprenant des moyens de dégonflage passifs du pneumatique inactifs en dessous d'un seuil prédéterminé de pression du pneumatique et actifs au dessus de ce seuil. Ce système est caractérisé en ce que le système comprend des moyens pour réguler la pression de gonflage du pneumatique à une pression supérieure ou égale au seuil prédéterminé d'activation des moyens de dégonflage. Le seuil prédéterminé est inférieur ou égal à une pression de gonflage du pneumatique préconisée. Par exemple, la pression de gonflage préconisée correspond à une utilisation du pneumatique sur un véhicule automobile roulant à vide et en ville.

Les moyens de dégonflage passifs assurent une évacuation volontaire d'air du pneumatique vers l'extérieur.

Les moyens de dégonflage étant passifs, ils n'ont pas besoin d'être commandés par des moyens de commande particuliers.

L'invention permet ainsi de simplifier la commande des moyens de gonflage et de dégonflage du pneumatique.

Un système selon l'invention peut en outre comporter l'une ou plusieurs des caractéristiques suivantes :
- Les moyens de dégonflage passifs comprennent une zone poreuse de l'ensemble. La zone poreuse peut être portée par le pneumatique ou par la roue. En particulier, il est avantageux que la zone poreuse soit portée par la jante de la roue.
   Il est classique de fabriquer une roue en aluminium conformément à un procédé de moulage basse pression. Pour éviter un défaut d'étanchéité dû à la relative porosité de l'aluminium, une roue en aluminium comprend généralement, dans l'état de la technique, des parois relativement épaisses.
   Dans l'invention, on tolère que certaines zones des parois de la roue soient poreuses et forment les moyens de dégonflage passifs. Ainsi, il est possible de réduire l'épaisseur des parois de la roue par rapport à l'état de la technique ce qui permet de diminuer la masse de la roue et d'en diminuer les coûts de fabrication.
   La zone poreuse peut également être obtenue au moyen de micros rainures ou de stries formées dans la jante de la roue.
- La pression de gonflage préconisée est une pression de gonflage à chaud.
- La pression de gonflage préconisée est une pression de gonflage à froid.
- Le seuil prédéterminé est inférieur de quelques dixièmes de bar à la pression de gonflage préconisée.
- Les moyens de dégonflage passifs comprennent un clapet de dégonflage porté par l'ensemble. Lors de la conception du clapet de dégonflage, on peut très facilement spécifier son seuil de pression d'activation ainsi que son débit.
- Lorsque le clapet de dégonflage est ouvert, le débit du clapet de dégonflage est supérieur à 0,5 litres d'air par jour.
- Lorsque le clapet de dégonflage est ouvert et que la pression dans le pneumatique est égale au seuil de pression prédéterminé, le débit du clapet de dégonflage est inférieur à 20 litres d'air par jour.
- Le clapet de dégonflage est porté par la roue à l'emplacement classiquement réservé à la fixation d'une valve de gonflage. Ainsi, on peut utiliser une roue standard.
- Le clapet de dégonflage est porté au centre de la roue.
- Le système comprend en outre un clapet de gonflage intercalé dans un circuit d'alimentation en air du pneumatique, les clapets de gonflage et de dégonflage étant intégrés au sein d'un unique dispositif porté par la roue. Grâce à cette caractéristique, il est nécessaire de ne prévoir qu'un seul alésage dans la roue lors de sa fabrication.
- Le système comprend un dispositif autorisant le roulage à plat, par exemple un appui de soutien.

Ce système de régulation de la pression est particulièrement simple puisque seuls les moyens de gonflage du système nécessitent d'être commandés.

De façon avantageuse, les moyens de gonflage comprennent une source d'air sous pression apte à produire un débit d'air supérieur au débit des moyens de dégonflage passifs.

De préférence, le rapport entre le débit de la source d'air et le débit des moyens de dégonflage passifs est supérieur à 10.

L'invention a également pour objet une roue caractérisée en ce qu'elle est destinée à faire partie d'un système tel que précédemment défini et en ce qu'elle comprend les moyens dégonflage passifs.

L'invention a également pour objet un pneumatique caractérisé en ce qu'il est destiné à faire partie d'un système tel que précédemment défini et en ce qu'il comprend les moyens de dégonflage passifs.

Comme les moyens de dégonflage sont passifs et ne sont pas commandés, ils sont actifs en permanence. Ainsi, ces moyens de dégonflage passifs permettent une évacuation d'air permanente. Cependant, comme le débit d'évacuation d'air est calibré et relativement faible, il est tout de même possible d'augmenter la pression du pneumatique en commandant les moyens de gonflage de sorte qu'ils fassent entrer de l'air dans le pneumatique selon un débit supérieur au débit calibré de dégonflage.

Pour abaisser la pression du pneumatique, il suffit simplement de désactiver les moyens de gonflage et de laisser l'air s'évacuer du pneumatique grâce aux moyens de dégonflage passifs.

L'invention sera mieux comprise à la lecture de la description qui va suivre donnée uniquement à titre d'exemple et faite en se référant aux dessins annexés dans lesquels :
- la figure 1 est un schéma d'un système de régulation de la pression des pneumatiques d'un véhicule automobile selon l'invention,
- la figure 2 est un schéma d'un premier mode de réalisation de moyens de dégonflage passifs selon l'invention intégrés dans le système représenté sur la figure 1,
- la figure 3 est un schéma d'un deuxième mode de réalisation de moyens de dégonflage passifs selon l'invention,
- les figures 4 et 5 sont des vues en coupe d'une roue comprenant les moyens de dégonflage passifs schématisés sur la figure 3, et
- la figure 6 présente une vue en coupe d'une roue comprenant les moyens de dégonflage passifs schématisés à la figure 2.

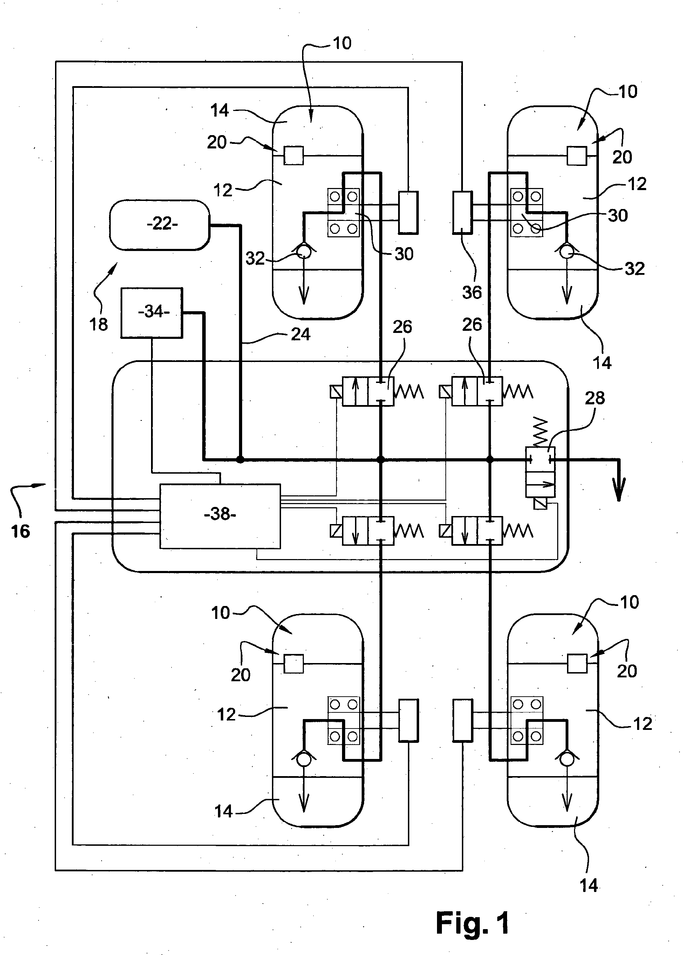

On a représenté schématiquement sur la figure 1 quatre ensembles 10 d'une roue 12 et d'un pneumatique 14 d'un véhicule automobile.

La pression des pneumatiques 14 est régulée par un système 16 de régulation de la pression selon l'invention.

Le système 16 de régulation de la pression comprend des moyens 18 de gonflage et des moyens 20 de dégonflage des pneumatiques 14.

Les moyens 18 de gonflage comprennent une source d'air 22 formée par exemple par un compresseur, un circuit d'alimentation 24 en air des pneumatiques 14, des électrovannes 26 intercalées sur le circuit d'alimentation 24 entre chaque pneumatique 14 et la source d'air 22, et, de façon optionnelle, une électrovanne d'échappement 28.

Le circuit d'alimentation 24 relie la source d'air 22 à chacun des pneumatiques 14 par l'intermédiaire de joints tournants, par exemple des roulements 30 à passage d'air portés par chaque roue. Le circuit d'alimentation 24 comprend en outre des clapets 32 de gonflage unidirectionnels qui n'autorisent un passage de l'air dans le circuit d'alimentation que depuis la source d'air 22 vers le pneumatique 14. Les clapets 32 de gonflage sont en position ouverte lorsque la pression dans le circuit d'alimentation 24 est supérieure à la pression dans le pneumatique 14. Le clapet 32 est un clapet passif de conception très simple et peu coûteuse.

La pression des pneumatiques 14 est mesurée au moyen d'un capteur de pression 34 disposé de manière à mesurer la pression régnant dans le circuit d'alimentation 24. La pression des pneumatiques peut également être mesurée de manière indirecte au moyen de capteurs 36 de vitesse de rotation des roues 12.

Les capteurs 36, les électrovannes 26 et le capteur de pression 34 sont reliés à un calculateur 38 apte à déterminer la pression des pneumatiques 14.

La mesure de pression des pneumatiques n'est pas l'objet de cette demande et peut être effectuée par tout moyen connu.

Les moyens de dégonflage 20 du système de régulation de la pression des pneumatiques 14 sont des moyens de dégonflage passifs. En d'autres termes, ces moyens de dégonflage passifs 20 assurent une évacuation volontaire d'air du pneumatique 14 vers l'extérieur.

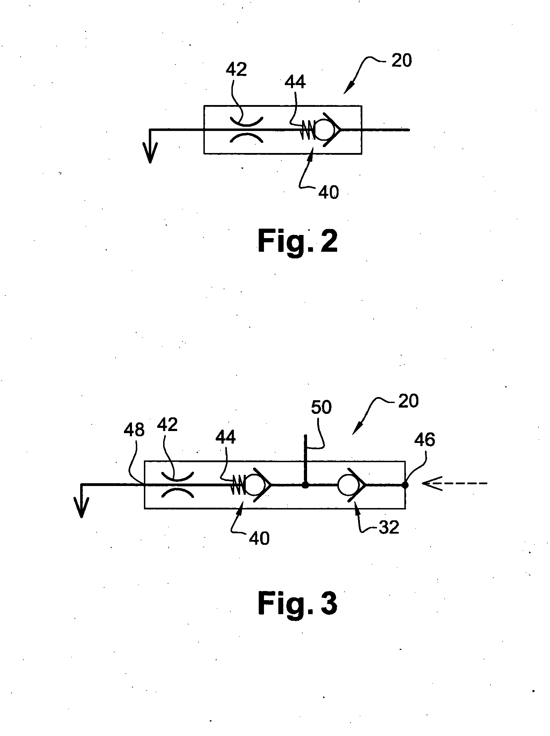

Les moyens 20 de dégonflage passifs des pneumatiques vont être décrits plus en détail en référence aux figures 2 à 6.

Selon un premier mode de réalisation des moyens 20 de dégonflage passifs du pneumatique 14, les moyens 20 sont rapportés sur l'ensemble 10. Ces moyens 20 sont schématisés sur la figure 2 et comprennent un clapet de dégonflage 40 et un limiteur de débit 42. Les positions respectives du limiteur de débit 42 et du clapet de dégonflage 40 sont indifférentes. La figure 2 illustre le cas où le clapet de dégonflage 40 est disposé en amont du limiteur de débit 42, l'inverse est aussi tout à fait possible.

Les moyens 20 de dégonflage passifs du pneumatique 14 n'autorisent qu'un passage d'air depuis l'intérieur du pneumatique 14 vers l'extérieur du pneumatique, c'est-à-dire qu'ils n'autorisent qu'une évacuation d'air.

Le débit des moyens 20 de dégonflage passifs est très inférieur au débit de gonflage autorisé par les moyens 18 de gonflage du système 16 de régulation. Le rapport entre les deux débits (gonflage/dégonflage) est au minimum de 10 et peut être bien supérieur à 10 pour limiter le temps nécessaire au gonflage.

Le débit de dégonflage est calibré à l'aide du limiteur de débit 42. Si l'on souhaite un débit calibré très faible, on peut avantageusement remplacer le limiteur de débit 42 par une membrane perméable. Le débit de la membrane est fonction de sa surface.

Les moyens 20 comprennent par ailleurs un ressort 44 de calibrage de l'ouverture du clapet 40. Grâce à ce ressort 44, les moyens 20 de dégonflage passifs sont inactifs en dessous d'un seuil prédéterminé de pression du pneumatique 14 et sont actifs au-dessus de ce seuil, le seuil pouvant être changé en modifiant les caractéristiques du ressort 44.

Le seuil prédéterminé est inférieur ou égal à une pression de gonflage du pneumatique préconisée. La pression dans les pneumatiques étant maintenue supérieure ou égale à cette valeur préconisée, cela signifie que le dégonflage est alors permanent.

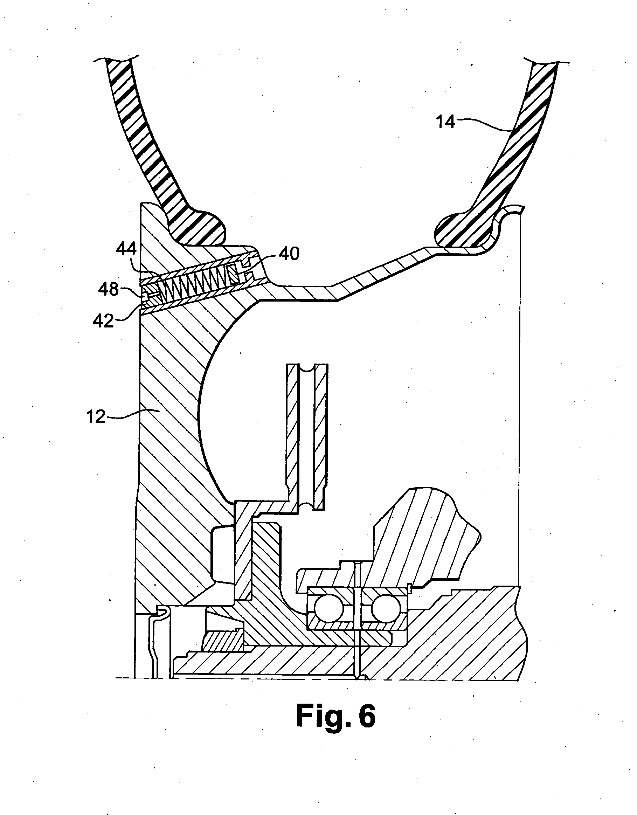

Selon une première variante représentée à la figure 6, les moyens de dégonflage passifs 40, 42 et 44 sont positionnés sur la roue 12, par exemple à la place de la valve de gonflage devenue inutile du fait du système 16 de régulation.

Selon une deuxième variante non représentée, les moyens de dégonflage 20 de la figure 2 sont intégrés sur le pneumatique 14 au lieu d'être intégrés sur la roue 12.

Selon une troisième variante préférentielle représentée sur les figures 3 à 5, les moyens 20 de dégonflage passifs du pneumatique 14 comprennent à la fois le clapet 40 de dégonflage destiné à mettre en communication fluidique l'intérieur du pneumatique 14 avec l'air ambiant, et le clapet 32 de gonflage destiné à mettre en communication fluidique le circuit 24 d'alimentation d'air et l'intérieur du pneumatique 14.

Comme représenté sur la figure 3, les moyens 20 de dégonflage passifs selon la troisième variante du premier mode de réalisation comprennent un raccord 46 vers le circuit 24 d'alimentation d'air, une embouchure 48 vers l'air extérieur et une embouchure 50 vers l'intérieur du pneumatique 14.

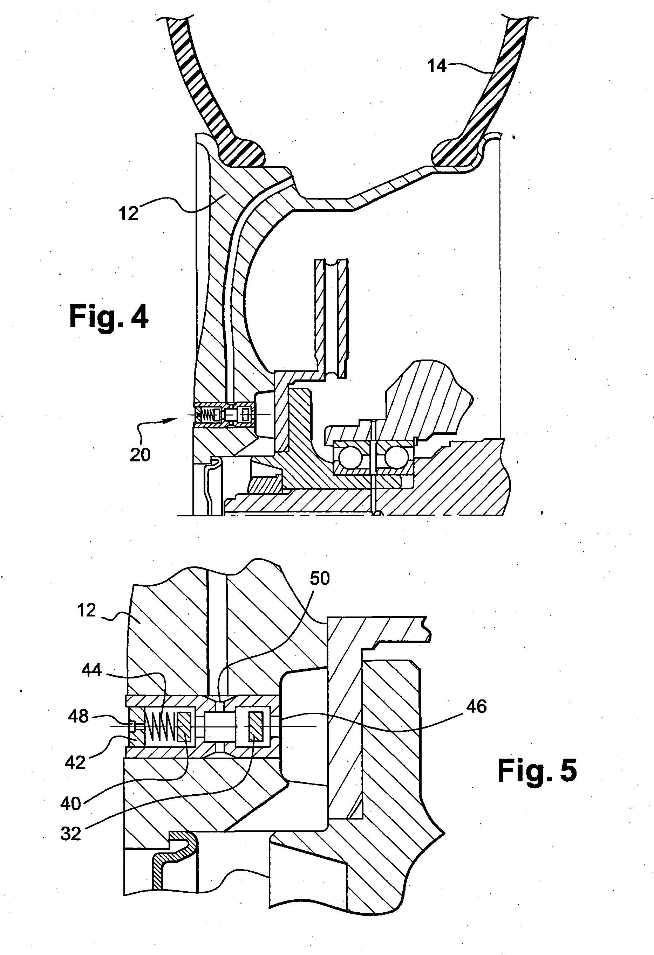

La figure 4 est une coupe axiale d'un ensemble d'une roue 12 et d'un pneumatique 14 comprenant des moyens 20 de dégonflage passifs du pneumatique selon la troisième variante du premier mode de réalisation. La figure 5 est une coupe identique à la figure 4 représentant plus en détail les moyens 20.

Cette troisième variante est particulièrement intéressante dans la mesure où la roue 12 est particulièrement simple à fabriquer. En effet, étant donné que le clapet 40 de dégonflage et le clapet 32 de gonflage sont réunis au sein d'un unique dispositif, il n'est nécessaire de concevoir qu'un seul emplacement dans la roue 12 pour accueillir les deux clapets. En particulier, si la roue 12 est fabriquée par moulage, l'orifice destiné à accueillir les deux clapets est obtenu au moyen d'un insert disposé à l'intérieur du moule. Étant donné que l'orifice traverse la roue 12 sur toute son épaisseur, l'insert peut être aisément ôté de la roue en sortie de moule, par l'extérieur de la roue.

Selon un second mode de réalisation des moyens 20 de dégonflage passifs du pneumatique 14, les moyens 20 comprennent une zone poreuse de l'ensemble, c'est-à-dire une zone de l'ensemble qui est non étanche et qui laisse passer de l'air depuis l'intérieur du pneumatique vers l'extérieur selon un débit calibré.

Selon une première variante non représentée, la zone poreuse est portée par la roue, de préférence par une jante de la roue.

Selon une seconde variante non représentée, la zone poreuse est formée sur le pneumatique.

Le système 16 de régulation de la pression qui vient d'être décrit permet la régulation de la pression d'air des pneumatiques 14 par mise en oeuvre du procédé de l'invention.

Pour gonfler un pneumatique, on active les moyens de gonflage 18 et on ouvre l'électrovanne 26 du pneumatique que l'on souhaite gonfler.

On décrira ci-dessous le fonctionnement des moyens 20 de dégonflage passifs du pneumatique 14 dans différents cas, en faisant les hypothèses suivantes.

On considère un véhicule automobile dont la durée de vie est de dix ans. Ce véhicule comprend un compresseur utilisé pour une autre fonction que la régulation de la pression des pneumatiques, par exemple pour des suspensions à air. Ce compresseur a un débit de 25 litres par minute à la pression voulue et une durée de vie de 500 heures. Le volume d'un pneumatique 10 de ce véhicule automobile est de 30 litres. Enfin, en roulage normal, la pression préconisée basse du pneumatique est de 2,3 bars et la pression préconisée haute lorsque le véhicule est chargé ou lorsqu'il roule sur autoroute est de 2,6 bars. Les valeurs de pression mentionnées ci-dessus sont des valeurs préconisées pour un pneumatique chaud.

Pour augmenter la pression du pneumatique 14 depuis la pression de gonflage préconisée basse à la pression de gonflage préconisée haute, on active les moyens 18 de gonflage du pneumatique 14 du système 16 de régulation de la pression selon l'invention, selon un débit supérieur au débit des moyens 20 de dégonflage passifs. On alimente donc le pneumatique en air au moyen de la source 22 d'air sous pression comme décrit précédemment.

Pour diminuer la pression du pneumatique 14 depuis la pression préconisée haute à la pression préconisée basse, on désactive complètement les moyens 18 de gonflage.

Pour maintenir la pression du pneumatique 14 autour d'une pression de gonflage préconisée, on active régulièrement les moyens 18 de gonflage en fonction des mesures de pression des pneumatiques, avec une fréquence et une durée qui dépendent du débit du moyen de dégonflage et de la précision voulue de régulation.

Dans les exemples suivants, on supposera que sur les dix années de durée de vie du véhicule automobile, celui-ci est en roulage durant 4 500 heures. Par ailleurs, on fera l'hypothèse que le véhicule roule sur autoroute ou en charge durant 50 % du temps.

Le procédé de dégonflage du pneumatique d'un ensemble comprenant des moyens 20 de dégonflage passifs selon le premier mode de réalisation, c'est-à-dire comprenant un clapet calibré 40 rapporté est le suivant.

Selon un premier cas, le clapet 40 est calibré de sorte qu'il autorise un débit de 510 litres par mois, soit de 17 litres par jour, à la pression à laquelle il s'active. Par ailleurs, le clapet 40 est conçu de sorte qu'il est en position fermée lorsque la pression du pneumatique 14 est inférieure à la pression de gonflage du pneumatique 14 préconisée basse à chaud, c'est-à-dire en dessous de 2,3 bars.

Dans ce cas, la pression du pneumatique 14 est maintenue aux alentours de la pression préconisée basse en roulage normal. Par conséquent, en roulage normal il n'est pas nécessaire d'ajuster la pression du pneumatique à l'aide du système 16 de régulation. Lors de conditions particulières, par exemple lors d'un trajet sur autoroute ou lorsque le véhicule est chargé, on gonfle le pneumatique 14 de sorte que sa pression à chaud passe à 2,6 bars.

Le maintien à la pression préconisée haute des quatre pneumatiques demande par exemple un gonflage de 14 secondes toutes les deux heures. Ainsi, le volume d'air nécessaire pour compenser le dégonflage lorsque le pneumatique 14 est à la pression préconisée haute au cours de la durée de vie du véhicule est de 1 800 litres d'air par pneumatique, soit environ 8 000 litres d'air pour le véhicule en tenant compte des différentes pertes du système de régulation.

En supposant que l'on utilise le compresseur déjà présent sur le véhicule initialement dédié à une autre fonction que le gonflage du pneumatique, on l'utilisera donc pendant environ 5 heures et 20 minutes, soit 1 % de sa durée de vie. Il est donc tout à fait possible d'utiliser une partie de la disponibilité de ce compresseur pour gonfler les pneumatiques.

Grâce au débit calibré de 17 litres par jour, la pression d'un pneumatique passe de la pression haute préconisée à la pression basse préconisée en approximativement 12 heures.

Selon un deuxième cas envisageable, le débit calibré du clapet 40 est également de 17 litres par jour. En revanche, le seuil prédéterminé de pression du pneumatique en dessous duquel le clapet est fermé est inférieur de quelques dixièmes de bars à la pression de gonflage minimum préconisée. Par exemple, ce seuil est fixé à 1,9 bars.

Dans ce cas, il est nécessaire d'actionner les moyens 18 de gonflage régulièrement, même lors d'un roulage normal, c'est-à-dire en ville et non chargé.

Dans ce cas, et contrairement au cas précédent, à la suite d'un stationnement prolongé du véhicule automobile, il est nécessaire de gonfler les pneumatiques 14 pour les remettre à la pression préconisée basse. En effet, lors d'un stationnement prolongé, les pneumatiques refroidissent et les moyens de dégonflage passifs dégonflent le pneumatique jusqu'au seuil fixé.

Il est à noter que le refroidissement du pneumatique a un effet plus rapide sur la baisse de la pression du pneumatique que les moyens de dégonflage. Une fois que le pneumatique est froid, seuls les moyens de dégonflage ont un effet sur la pression du pneumatique. Cet aspect est particulièrement intéressant car la baisse de pression liée au refroidissement d'un pneumatique (environ 0,3 bar) sera effective peu de temps après l'arrêt et les pertes d'air comprimé seront alors limitées. Le pneumatique froid après un arrêt prolongé sera à 1,9 bar, remontera à une pression de 2,2 bar en roulage et ne nécessitera que 0,1 bar d'appoint.

Dans ce cas particulier, le volume d'air nécessaire pour compenser la fuite en roulage pendant dix ans est de 3 600 litres par pneumatique, soit environ 16 000 litres d'air pour l'ensemble du véhicule en tenant compte des différentes pertes du système. Il est donc possible d'utiliser le compresseur déjà présent sur le véhicule pendant environ 10 heures et 40 minutes, soit environ 2 % de sa durée de vie.

Le fait que le clapet 40 soit calibré de façon à se fermer en dessous d'un seuil inférieur à la pression préconisée basse permet l'utilisation de pressions préconisées basses différentes entre les deux essieux du véhicule tout en utilisant qu'en seul type de clapet de dégonflage. Cela permet également de mieux gérer les tolérances de fabrication et de fonctionnement du clapet de dégonflage.

Grâce à la connaissance du débit du clapet de dégonflage, on peut détecter des fuites du pneumatique dues à une crevaison. En effet, en comparant la fréquence d'activation des moyens de gonflage et le débit connu du clapet de dégonflage, on peut détecter de telles fuites. De même, au démarrage du véhicule, une mesure de pression inférieure à un seuil prédéterminé permettra de détecter une fuite anormale (et son débit en fonction du temps d'arrêt).

Le procédé de dégonflage du pneumatique d'un ensemble comprenant des moyens de dégonflage passifs selon le second mode de réalisation, c'est-à-dire dans lequel l'ensemble de la roue et du pneumatique comprend une zone poreuse est le suivant.

Selon un premier cas, la zone poreuse autorise un dégonflage du pneumatique selon un débit faible de 15 litres par mois, soit 0,5 litres par jour.

Dans ce cas, du fait que les moyens de dégonflage sont actifs quelle que soit la pression du pneumatique, ce dernier, lors d'un stationnement prolongé, peut se dégonfler totalement.

Compte tenu des différentes hypothèses faites précédemment, le volume d'air nécessaire à compenser la fuite permanente créée par la zone poreuse pendant dix ans est de 1 800 litres par pneumatique, soit environ 8 000 litres pour l'ensemble du véhicule.

Il est donc possible d'utiliser le compresseur déjà présent sur le véhicule automobile pendant environ 5 heures et 30 minutes, c'est-à-dire 1 % de sa durée de vie. Il suffit en effet pour maintenir la pression du pneumatique à la pression préconisée basse de le gonfler environ 14 secondes tous les trois jours.

Le passage de la pression préconisée haute à la pression préconisée basse dure environ 17 jours.

Selon un deuxième cas, le débit calibré de la zone poreuse est un débit élevé de 510 litres par mois, soit de 17 litres par jour. Dans ce cas, le temps de passage de la pression préconisée haute à la pression préconisée basse est de 12 heures ce qui permet une régulation de la pression relativement plus précise et plus rapide.

Cependant, le volume d'air nécessaire à compenser cette fuite permanente pendant dix ans est de 30 000 litres par pneumatique, soit 270 000 litres pour le véhicule ce qui requiert d'utiliser le compresseur déjà présent sur le véhicule pendant environ 180 heures, soit 33 % de la durée de vie du compresseur. Dans un tel cas, on ajoutera de préférence au véhicule un second compresseur adapté à ce besoin.

Grâce à l'invention, le système de régulation de la pression du pneumatique est relativement simple puisqu'il est susceptible d'utiliser une source d'air déjà présente sur le véhicule automobile. La fonction de dégonflage est assurée par les moyens de dégonflage passifs du pneumatique peu coûteux.

Enfin, on notera que l'invention n'est pas limitée aux modes de réalisation qui viennent d'être décrits.

En effet, il est possible de mettre en oeuvre l'invention sur des pneumatiques autorisant le roulage à plat. Le volume d'un pneumatique autorisant le roulage à plat est relativement plus petit que le volume d'un pneumatique classique si bien que le temps de gonflage et de dégonflage sont réduits. De plus, avec de tels pneumatiques, il est possible de démarrer plus rapidement après un stationnement de longue durée, sans attendre le gonflage des pneumatiques à la pression préconisée.

## Revendications

1. Système 16) de régulation de la pression d'un pneumatique (14) d'un véhicule comprenant des moyens (18) de gonflage du pneumatique et des moyens (20) de dégonflage du pneumatique passifs, inactifs en dessous d'un seuil prédéterminé de pression du pneumatique et actifs au dessus dudit seuil, **caractérisé en ce que** ledit système (16) comprend des moyens (34, 36, 38) pour réguler la pression de gonflage du pneumatique à une pression supérieure ou égale audit seuil prédéterminé de pression d'activation des moyens de dégonflage.

2. Système (16) selon la revendication 1, dans lequel, le pneumatique étant monté sur une roue (12), les moyens (20) de dégonflage passifs comprennent une zone poreuse de l'ensemble (10) pneumatique (14) et roue (12).

3. Système (16) selon la revendication 1, dans lequel le seuil prédéterminé de pression d'activation des moyens de dégonflage est une pression de gonflage à chaud préconisée du pneumatique.

4. Système (16) selon la revendication 1, dans lequel le seuil prédéterminé de pression d'activation des moyens de dégonflage est une pression de gonflage à froid préconisée du pneumatique.

5. Système (16) selon l'une quelconque des revendications 3 et 4, dans lequel le seuil prédéterminé de pression d'activation des moyens de dégonflage est inférieur de quelques dixièmes de bars à la pression de gonflage préconisée dudit pneumatique.

6. Système (16) selon l'une quelconque des revendications 1 à 5, dans lequel les moyens (20) de dégonflage passifs comprennent un clapet (40) de dégonflage porté par l'ensemble (10) pneumatique (14) et roue (12).

7. Système (16) selon la revendication 6, dans lequel, lorsque le clapet (40) de dégonflage est ouvert, le débit du clapet (40) de dégonflage est supérieur à 0,5 litres d'air par jour.

8. Système (16) selon la revendication 6 ou 7, dans lequel, lorsque le clapet (40) de dégonflage est ouvert et que la pression dans le pneumatique (14) est égale au seuil prédéterminé, le débit du clapet (40) de dégonflage est inférieur à 20 litres d'air par jour.

9. Système 16) selon l'une quelconque des revendications 6 à 8, dans lequel le clapet (40) de dégonflage est porté par la roue (12) à l'emplacement classiquement réservé à la fixation d'une valve de gonflage.

10. Système (16) selon l'une quelconque des revendications 6 à 8, dans lequel le clapet (40) de dégonflage est porté dans la zone centrale de la roue (12).

11. Système (16) selon l'une quelconque des revendications 6 à 10, comprenant en outre un clapet (32) de gonflage intercalé dans un circuit d'alimentation (24) en air du pneumatique (14), les clapets de gonflage (32) et de dégonflage (40) étant intégrés au sein d'un unique dispositif porté par la roue (12).

12. Système (16) selon l'une quelconque des revendications précédentes, dans lequel les moyens (18) de gonflage comprennent une source d'air sous pression (22) apte à produire un débit d'air supérieur au débit des moyens (20) de dégonflage passifs.

13. Système (16) selon la revendication 12, dans lequel le rapport entre le débit de la source d'air (12) et le débit des moyens (20) de dégonflage passifs est supérieur à 10.

14. Roue (12) **caractérisée en ce qu'**elle est destinée à faire partie d'un système (16) selon l'une quelconque des revendications 1 à 13 et **en ce qu'**elle comprend les moyens (20) de dégonflage passifs.

15. Pneumatique (14) **caractérisé en ce qu'**il est destiné à faire partie d'un système (16) selon l'une quelconque des revendications 1 à 13 et **en ce qu'**il comprend les moyens (20) de dégonflage passifs.

## Patentansprüche

1. System (16) zur Regelung des Drucks eines Luftreifens (14) eines Fahrzeugs, das Einrichtungen (18) zum Aufpumpen des Luftreifens und passive Einrichtungen (20) zum Ablassen von Luft aus dem Luftreifen enthält, die unterhalb einer vorbestimmten Druckschwelle des Luftreifens inaktiv und oberhalb der Schwelle aktiv sind, **dadurch gekennzeichnet, dass** das System (16) Einrichtungen (34, 36, 38) enthält, um den Fülldruck des Luftreifens auf einen Druck höher als die oder gleich der vorbestimmten Aktivierungsdruckschwelle der Luftablasseinrichtungen zu regeln.

2. System (16) nach Anspruch 1, wobei, wenn der Luftreifen auf ein Rad (12) montiert ist, die passiven Luftablasseinrichtungen (20) einen porösen Bereich der Einheit (10) aus Luftreifen (14) und Rad (12) enthalten.

3. System (16) nach Anspruch 1, wobei die vorbestimmte Aktivierungsdruckschwelle der Luftablasseinrichtungen ein empfohlener Kaltreifendruck ist.

4. System (16) nach Anspruch 1, wobei die vorbestimmte Aktivierungsdruckschwelle der Luftablasseinrichtungen ein empfohlener Warmreifendruck ist.

5. System (16) nach einem der Ansprüche 3 und 4, wobei die vorbestimmte Aktivierungsdruckschwelle der Luftablasseinrichtungen einige Zehntel Bar unter dem empfohlenen Reifendruck liegt.

6. System (16) nach einem der Ansprüche 1 bis 5, wobei die passiven Luftablasseinrichtungen (20) ein Luftablassventil (40) enthalten, das von der Einheit (10) aus Luftreifen (14) und Rad (12) getragen wird.

7. System (16) nach Anspruch 6, wobei, wenn das Luftablassventil (40) offen ist, der Durchsatz des Luftablassventils (40) höher als 0,5 Liter Luft pro Tag ist.

8. System (16) nach Anspruch 6 oder 7, wobei, wenn das Luftablassventil (40) offen und der Druck im Luftreifen (14) gleich der vorbestimmten Schwelle ist, der Durchsatz des Luftablassventils (40) niedriger als 20 Liter Luft pro Tag ist.

9. System (16) nach einem der Ansprüche 6 bis 8, wobei das Luftablassventil (40) vom Rad (12) an der Stelle getragen wird, die üblicherweise für die Befestigung eines Aufpumpventils reserviert ist.

10. System (16) nach einem der Ansprüche 6 bis 8, wobei das Luftablassventil (40) im zentralen Bereich des Rads (12) getragen wird.

11. System (16) nach einem der Ansprüche 6 bis 10, das weiter ein Aufpumpventil (32) enthält, das in einen Luftzufuhrkreis (24) des Luftreifens (14) eingefügt ist, wobei die Aufpump- (32) und Luftablassventile (40) in eine einzige vom Rad (12) getragene Vorrichtung eingebaut sind.

12. System (16) nach einem der vorhergehenden Ansprüche, wobei die Aufpumpeinrichtungen (18) eine Druckluftquelle (22) enthalten, die einen Luftdurchsatz höher als der Durchsatz der passiven Luftablasseinrichtungen (20) erzeugen kann.

13. System (16) nach Anspruch 12, wobei das Verhältnis zwischen dem Durchsatz der Luftquelle (12) und dem Durchsatz der passiven Luftablasseinrichtungen (20) höher als 10 ist.

14. Rad (12), **dadurch gekennzeichnet, dass** es dazu bestimmt ist, Teil eines Systems (16) nach einem der Ansprüche 1 bis 13 zu sein, und dass es die passiven Luftablasseinrichtungen (20) enthält.

15. Luftreifen (14), **dadurch gekennzeichnet, dass** er dazu bestimmt ist, Teil eines Systems (16) nach einem der Ansprüche 1 bis 13 zu sein, und dass er die passiven Luftablasseinrichtungen (20) enthält.

## Claims

1. A system (16) for regulating the pressure of a tyre (14) of a vehicle, of the type comprising inflation means (18) for inflating the tyre and passive deflation means (20) for deflating the tyre (14), the passive deflation means (20) being inactive below a predetermined pressure threshold of the tyre and active above this threshold, **characterised in that** said system comprises means (34, 36, 38) for regulating the tyre pressure at a pressure greater than or equal to said predetermined pressure threshold of activation of the passive deflation means.

2. A system (16) according to Claim 1, wherein, the tyre being mounted on a wheel (12), said passive deflation means (20) comprise a porous zone of the tyre (14) and wheel (12) assembly (10).

3. A system (16) according to Claim 1, wherein said predetermined pressure threshold of activation of the passive deflation means is a recommended inflation pressure of the tyre when hot.

4. A system (16) according to Claim 1, wherein said predetermined pressure threshold of activation of the passive deflation means is a recommended inflation pressure of the tyre when cold.

5. A system (16) according to any one of Claims 3 and 4, wherein said predetermined pressure threshold of activation of the passive deflation means is less by several tenths of a bar than the recommended inflation pressure of the tyre.

6. A system (16) according to any one of Claims 1 to 5, wherein the passive deflation means (20) comprise a deflation valve (40) borne by the tyre (14) and wheel (12) assembly (10).

7. A system (16) according to Claim 6, wherein, when the deflation valve (40) is open, the flow rate of the deflation valve (40) is greater than 0.5 litres of air per day.

8. A system (16) according to Claim 6 or 7, wherein, when the deflation valve (40) is open and the pressure in the tyre (14) is equal to the predetermined threshold, the flow rate of the deflation valve (40) is less than 20 litres of air per day.

9. A system (16) according to any one of Claims 6 to 8, wherein the deflation valve (40) is borne by the wheel (12) in the location conventionally reserved for affixing an inflation valve.

10. A system (16) according to any one of Claims 6 to 8, wherein the deflation valve (40) is borne in the central zone of the wheel (12).

11. A system (16) according to any one of Claims 6 to 10, furthermore comprising an inflation valve (32) inserted into an air supply circuit (24) for the tyre (14), the inflation (32) and deflation (40) valves being integrated in a single device borne by the wheel (12).

12. A system (16) according to any one of the previous Claims, wherein the inflation means (18) comprise a pressurised air source (22) capable of producing a flow rate of air greater than the flow rate of the passive deflation means (20).

13. A system (16) according to Claim 12, wherein the ratio between the flow rate of the air source (12) and the flow rate of the passive deflation means (20) is greater than 10.

14. A wheel (12), **characterised in that** it is intended to form part of a system (16) according to any one of Claims 1 to 13 and **in that** it comprises the passive deflation means (20).

15. A tyre (14), **characterised in that** it is intended to form part of a system (16) according to any one of Claims 1 to 13 and **in that** it comprises the passive deflation means (20).
